# EUROPÄISCHE PATENTSCHRIFT

(11) **EP 1 964 720 B1**
(45) Veröffentlichungstag und Bekanntmachung des Hinweises auf die Patenterteilung: **27.05.2009**
(21) Anmeldenummer: 07004251.0
(22) Anmeldetag: 01.03.2007
(51) Int. Cl.: B60R 1/06

(54) **Aussenrückblickspiegel für Fahrzeuge, vorzugsweise für Kraftfahrzeuge**
Outside rear view mirror for vehicles, especially for motor vehicles
Rétroviseur extérieur pour véhicules, de préférence pour véhicules automobiles

(43) Veröffentlichungstag der Anmeldung: 03.09.2008
(73) Patentinhaber: Visiocorp Patents S.à.r.l., 1653 Luxembourg (LU)
(72) Erfinder: Liesener, Alf, 73614 Schorndorf (DE)
(74) Vertreter: Rausch, Gabriele

(56) Entgegenhaltungen:
- DE-A1- 3 705 574
- GB-A- 2 341 365
- US-A- 4 981 072
- US-A1- 2006 262 550

## Beschreibung

Die Erfindung betrifft einen Außenrückblickspiegel für Fahrzeuge, vorzugsweise für Kraftfahrzeuge, nach dem Oberbegriff des Anspruches 1.

Es ist ein Außenrückblickspiegel bekannt (DE 37 05 574 A1), bei dem das Spiegelgehäuse einstückiger Bestandteil der Fahrzeugtür ist. Das Spiegelgehäuse hat eine zum Fahrzeuginneren weisende Öffnung, die durch eine Spiegelglashalterung verschlossen ist. Dieser Außenrückbliclcspiegel besteht aus einer Vielzahl von Bauteilen, die die Herstellung und die Montage des Außentückblickspiegels erschweren und verteuern.

Aus dem Dokument US 2006/0262550 A1 ist ein Aussenrückspiegel nach dem Oberbegriff des Anspruchs 1 bekannt.

Der Erfindung liegt die Aufgabe zugrunde, den gattungsgemäßen Außenrückblickspiegel so auszubilden, dass er bei einfacher Ausbildung kostengünstig hergestellt und einfach montiert werden kann.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel hat der im Spiegelgehäuse vorgesehene Halter einen quer von der Innenseite der Rückwand des Spiegelgehäuses abstehenden Abschnitt, an dem das Spiegelglas gehalten ist. Dieser Abschnitt wird durch eine Einformung des Spiegelgehäuses gebildet. Diese Einformung kann bereits beim Spritzgießen des Spiegelgehäuses vorgesehen werden. Durch diese Einformung wird im Bereich der Rückwand des Spiegelgehäuses ein Aufnahmeraum gebildet, der durch den quer abstehenden Abschnitt sowie einen Längsabschnitt begrenzt wird. Der quer abstehende Abschnitt bildet in diesem Fall die quer zur Längserstreckung des Spiegelgehäuses verlaufende Wandung des Aufnahmeraumes, während der Längsabschnitt durch die etwa in Längsrichtung des Spiegelgehäuses verlaufende Wand des Aufnahmeraumes gebildet wird. Die Querwand dient zur Befestigung des Spiegelglases, vorteilhaft eines Spiegelantriebes, der auf der vom Aufnahmeraum abgewandten Außenseite dieser Querwand befestigt wird.

Der Aufnahmeraum dient vorteilhaft zur Unterbringung von zusätzlichen Bauteilen oder Systemen. Besonders vorteilhaft wird in diesem Aufnahmeraum wenigstens eine Leuchteneinheit untergebracht. Die Leuchteneinheit kann beispielsweise als Fahrtrichtungsanzeiger, als Tagfahrlicht, als Umfeldbeleuchtung und dergleichen dienen.

Vorteilhaft ist das Spiegelgehäuse einstückig ausgebildet, wobei die Befestigungselemente für zu montierende Bauteile/Systeme innerhalb des Spiegelgehäuses mit ihm verbunden sind. Das Spiegelgehäuse wird vorteilhaft einstückig in einem Spritzgussverfahren aus Kunststoff hergestellt. Hierbei können alle relevanten Anschlusselemente und auch der quer abstehende Abschnitt des Halters gleichzeitig mit dem Spiegelgehäuse fest verbunden hergestellt werden.

Der Halter weist vorteilhaft zusätzlich zum quer abstehenden Abschnitt auch einen etwa in Längsrichtung des Spiegelgehäuses sich erstreckenden Abschnitt auf. Der quer abstehende Abschnitt liegt in einem Abstand von der Öffnung des Spiegelgehäuses, in dem sich das Spiegelglas befindet. Durch den Abstand des quer abstehenden Abschnittes von der Öffnung wird ein Einbauraum innerhalb des Spiegelgehäuses bestimmt, in dem sowohl ein eventuell vorhandener Spiegelantrieb als auch das Spiegelglas so untergebracht werden können, dass das Spiegelglas einwandfrei im erforderlichen Maße für die Spiegelverstellung geschwenkt werden kann.

Die Längserstreckung wird durch den Abstand des quer abstehenden Abschnittes von der Öffnung des Spiegelgehäuses zusammen mit dem Längenmaß bestimmt, welches die Länge des nutzbaren Spiegelgehäuses bestimmt und das vom Design vorgegeben ist.

Das Spiegelgehäuse kann einstückig mit der Karosserie des Kraftfahrzeuges ausgebildet sein. So kann das Spiegelgehäuse beispielsweise aus der Fahrzeugkarosserie herausgeformt werden.

Es ist aber auch möglich, das Spiegelgehäuse als gesondertes Element am Fahrzeug zu befestigen.

Vorteilhaft wird der Aufnahmeraum durch wenigstens eine Abdeckung geschlossen. Sie ist vorteilhaft so ausgebildet, dass sie eine stetige Fortsetzung der Außenseite der Rückwand des Spiegelgehäuses bildet_ Die Abdeckung kann beispielsweise transparent ausgebildet sein.

Es ist auch möglich, die Abdeckung beispielsweise durch eine Lichtscheibe zu bilden, die so ausgebildet ist, dass sie den Aufnahmeraum an der Rückwand des Spiegelgehäuses abschließt.

Auch ist es möglich, die Abdeckung aus teillichtdurchlässigem Material herzustellen und auf ihrer Außenseite so zu lackieren, dass bei eingeschalteter Leuchteneinheit das Licht nach außen gelangen kann. Ist die Leuchteneinheit nicht eingeschaltet, dann ist von außen aufgrund der geringen Transmission nicht erkennbar, dass in diesem Bereich eine Lichtdurchtrittsstelle vorhanden ist.

Insbesondere wenn das Spiegelgehäuse aus der Karosserie des Fahrzeuges herausgeformt ist, kann das Spiegelgehäuse aufgrund der Längserstreckung des Längsabschnittes sowie des Abstandes des quer abstehenden Abschnitts von der Öffnung besonders schmal und schlank ausgebildet sein. Dadurch steht der erfindungsgemäße Außenrückblickspiegel nicht weit seitlich vom Fahrzeug vor. Aufgrund dieser Ausbildung kann ein kleineres Spiegelglas eingesetzt werden, das allerdings zur Erfüllung der gesetzlichen Bestimmungen in diesem Falle gekrümmt ausgebildet ist.

Die einstückig mit der Fahrzeugkarosserie ausgebildeten Spiegelgehäuse reduzieren den Luftwiderstand und tragen zur Reduzierung des Verletzungsrisikos von Fußgängern und anderen Verkehrsteilnehmern bei.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: einen schematischen Schnitt durch einen erfindungsgemäßen Außenrückblickspiegel,
- Fig. 2: in einer Darstellung entsprechend Fig. 1 eine zweite Ausführungsform eines erfindungsgemäßen Außenrückblickspiegels,
- Fig. 3: in schematischer Darstellung verschiedene Designlängen von Spiegelgehäusen.

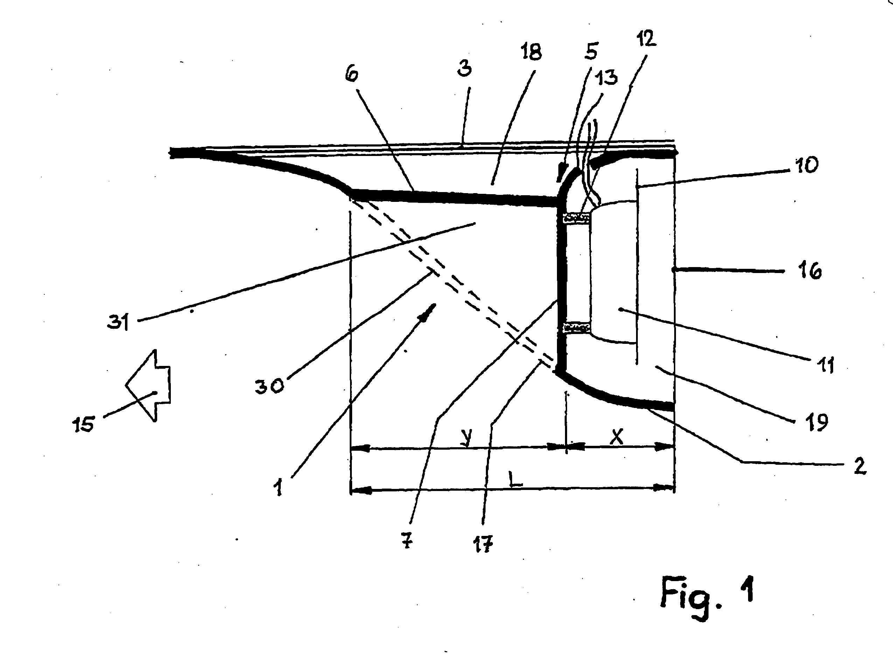

Fig. 1 zeigt einen schematischen Schnitt durch einen einstückigen Außenrückblickspiegel 1. Er hat ein Gehäuse 2, dessen Querschnitt sich in Fahrtrichtung 15 verjüngt. Im Bereich seiner größten Querschnittsausdehnung hat das Gehäuse 2 eine Öffnung 16, in der sich ein schematisch dargestelltes Spiegelglas 10 befindet. Es sitzt auf einem (nicht dargestellten) Spiegelglasträger, der mit einem Spiegelantrieb 11 verstellt werden kann. Er befindet sich hinter dem Spiegelglas 10 und ist so ausgebildet, dass das Spiegelglas 10 um zwei zueinander senkrechte Achsen verstellt werden kann.

Der Außenrückblickspiegel 1 befindet sich an einer Fahrzeugkarosserie 3, die in Fig. 1 schematisch angedeutet ist. Die von der Fahrzeugkarosserie 3 abgewandte Rückseite 17 des Gehäuses 2 ist so gerundet ausgeführt, dass der Luftwiderstand gering ist und unzulässige Windgeräusche beim Fahren vermieden werden. Von der Öffnung 16 aus verläuft die Rückseite 17, im Schnitt gemäß Fig. 1 gesehen, in Richtung auf die Fahrzeugkarosserie 3 etwa S-förmig. Die Rückwand 17 verläuft an ihrem von der Öffnung 16 abgewandten Ende etwa tangential zur Fahrzeugkarosserie 3.

Der Außenrückblickspiegel 1 kann an der Fahrzeugkarosserie 3 befestigt sein. Es ist aber auch möglich, das Gehäuse 2 des Außenrückblickspiegels 1 einstückig mit der Fahrzeugkarosserie 3 auszubilden. In diesem Falle ist das Gehäuse 2 durch eine Ausformung der Fahrzeugkarosserie 3 gebildet. Die Rückwand 17 des Gehäuses 2 ist mit einer Einformung 5 versehen. Durch diese Einformung werden eine Längswand 6 und eine Querwand 7 gebildet. Die Längswand 6 verläuft im Ausführungsbeispiel in Fahrtrichtung 15, während die Querwand 7 senkrecht zu ihr verläuft. Die Einformung 5 kann so gestaltet sein, dass die Längswand 6 und/oder die Querwand 7 eben verlaufen. Die Längswand 6 muss sich nicht zwingend in Fahrtrichtung 15 erstrecken, sondern kann auch schräg zu ihr verlaufen. Auch die Querwand 7 muss nicht zwingend senkrecht zur Fahrtrichtung 15 liegen. Zwischen der Längswand 6 und der Fahrzeugkarosserie 3 verbleibt ein schmaler Längsraum 18, der gegen einen Einbauraum 19 geschlossen ist.

Die Querwand 17 dient als Befestigungsort für den Spiegelantrieb 11. Er wird über schematisch dargestellte Befestigungsmittel 12 an der Querwand 7 befestigt.

Die in Fahrtrichtung 15 gemessene Länge X, die dem Abstand der Querwand 7 von der Öffnung 16 des Spiegelgehäuses 2 entspricht, hat ein gängiges Maß zwischen etwa 30 und etwa 60 mm. Dieses verhältnismäßig kleine Maß reicht aus, um den Spiegelantrieb 11 zusammen mit dem Spiegelglas 10 im Einbauraum 19 des Spiegelgehäuses 2 unterzubringen. Die Längswand 6 hat in Fahrtrichtung 15 die Länge Y, die sich durch das Design des Spiegels und der dadurch festgelegten Gesamtlänge L ergibt. Mit ihr wird der in Fahrtrichtung 15 gemessene Abstand zwischen der Öffnung 16 des Spiegelgehäuses 2 und dem in Fahrtrichtung vorn liegenden Ende der Längswand 6 bestimmt. Das Längenmaß L ergibt sich somit aus der Summe der Maße X und Y. Durch diese Zuordnung der Maße X und Y wird unabhängig von der Größe des Gesamtspiegels ein für das eingesetzte Spiegelglas 10 immer gleich bleibendes Abmessungsverhältnis ermöglicht.

Die Tiefe X des Einbauraums 19 ist nur von der Spiegelhalterung und dem Spiegelantrieb 11 bestimmt. Der Spiegelantrieb 11 sitzt auf Domen 12, die im Spritzguss vorgefertigt sind. Um die Länge dieser Dome zu begrenzen und damit die Stabilität der Dome zu erhöhen, ist das Maß Y von Bedeutung. Läge ein sehr kurzer Außenspiegel vor, müsste die Einformung 5 nicht sehr tief sein, um die Rückwand 7 für die Spiegelhalterung zu bilden. Ist der Spiegel sehr lang, muss die Einformung 5 sehr tief sein, damit die Halterung über die Dome 12 stabil erfolgen kann.

Bei größeren Spiegelabmessungen quer zur Karosserie 3 ist die Querwand 7 entsprechend länger. Ebenso wird das Längenmaß X des Einbauraumes 19 im üblichen Bereich von etwa 30 bis etwa 60 mm eher in Richtung auf die höheren Abmessungen ausgewählt werden. Die Geometrie des Spiegelgehäuses 2 bestimmt das Längenverhältnis von X zu Y im Wesentlichen. Die konstruktive Ausgestaltung sowie die Ausbildung der Einformung 5 ermöglicht eine kostengünstige Herstellung und Montage des Außenrückblickspiegels unabhängig vom Design, da nur wenige Bauteile zur Befestigung des Spiegelantriebes 11 und des Spiegelglases 10 mit der Spiegelglasträgerplatte erforderlich sind und die Länge der Dome 12 auf ein stabiles Maß eingeschränkt bleibt.

Damit die Rückwand 17 trotz der Einformung 5 geschlossen ist, wird der Einformungsbereich durch eine Abdeckung 30 geschlossen. Sie ist so ausgebildet, dass ihre Außenseite eine stetige Fortsetzung der Außenseite des umgebenden Bereiches der Rückwand 17 bildet. Die Abdeckung 30 wird vorteilhaft eingeclipst oder eingerastet, so dass sie bei Bedarf entfernt werden kann. Es ist aber auch ohne Weiteres möglich, die Abdeckung 30 einzukleben oder einzuschweißen.

Die Einformung 5 bildet innerhalb des Spiegelgehäuses 2 einen Aufnahmeraum 31, der vor dem Anbringen der Abdeckung 30 offen ist. Dadurch ist es möglich, im Aufnahmeraum 31 weitere Elemente unterzubringen, wie beispielsweise Kameras, Sensoren, GPS-Einheiten und dergleichen. Besonders vorteilhaft kann der Aufnahmeraum 31 zur Unterbringung einer Leuchteneinheit verwendet werden. Diese Leuchteneinheit kann beispielsweise eine Wiederholblinkleuchte, eine Umfeldleuchte und dergleichen sein. Sie lässt sich besonders vorteilhaft an der Innenseite der Abdeckung 30 befestigen, so dass die Abdeckung 30 zusammen mit der Leuchteneinheit als vormontierte Baueinheit in das Spiegelgehäuse 2 eingesetzt werden kann. Die Abdeckung 30 weist für den Durchtritt des Lichtes wenigstens eine Lichtöffnung oder einen transparenten Bereich auf. Ist die Abdeckung 30 mit einer Lichtöffnung versehen, dann wird diese durch wenigstens eine Lichtscheibe abgedeckt.

Bei der in Fig. 1 dargestellten Ausführungsform sind die Rückwand 17 und die Einformung 5 mit der Längswand 6 und der Querwand 7 einstückig miteinander ausgebildet. Die Querwand 7 begrenzt den Aufnahmeraum 31 in Richtung auf die Öffnung 16 und die Längswand 6 quer zur Fahrtrichtung 15. Die beiden Wände 6, 7 verbinden einen Boden und eine Decke des Aufnahmeraumes 31.

Anstelle der Abdeckung 30, an der die Leuchteneinheit befestigt ist, kann die Abdeckung der Einformung 5 auch durch die Leuchteneinheit selbst erfolgen. Die Leuchteneinheit ist in diesem Falle so ausgebildet, dass sie den Einbauraum 31 nach außen vollständig abdeckt. Dies kann beispielsweise dadurch geschehen, dass die Leuchteneinheit mit wenigstens einer Lichtscheibe versehen ist, die in ihrer Umrissform an die Umrissform der durch die Einformung 5 gebildeten Öffnung in der Rückwand 17 des Spiegelgehäuses 2 angepasst ist. Die Außenseite der Lichtscheibe ist dann so gestaltet, dass sie eine stetige Fortsetzung der Außenseite der Rückwand 17 bildet.

Das Spiegelgehäuse 2 wird vorteilhaft zusammen mit der Einformung 5 im Spritzgussverfahren hergestellt. Dabei kann das Spiegelgehäuse 2 einstückig mit der Karosserie 3 ausgebildet sein.

Je nach Größe der Einformung 5 kann die Abdeckung 30 so groß sein, dass sie die gesamte Rückseite des Spiegelgehäuses 2 bedeckt.

In der Wandung des Einbauraums 19 des Spiegels ist wenigstens eine Öffnung 13 vorgesehen, die zur Durchführung elektrischer Anschlüsse dient. Diese Öffnung 13 wird beim Spritzguss gleich mit vergossen.

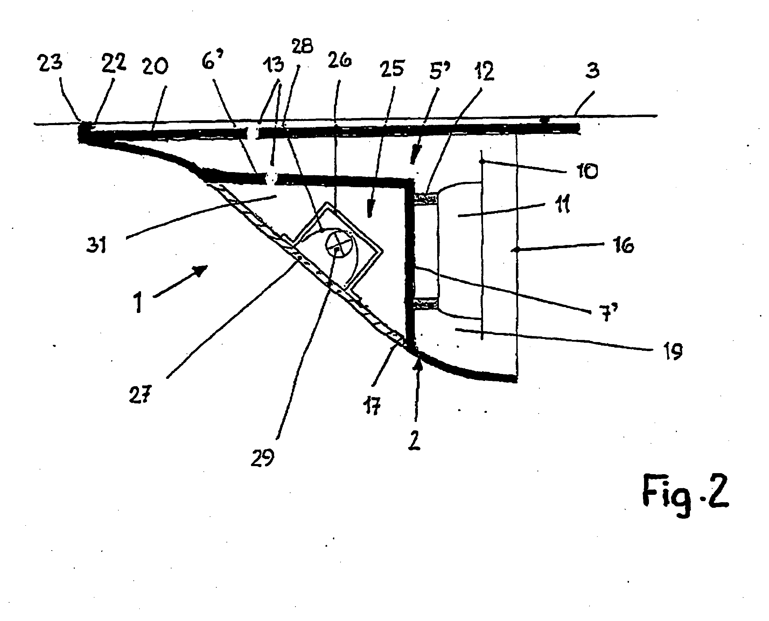

Fig. 2 zeigt die Möglichkeit, dass das Spiegelgehäuse 2 an der Fahrzeugkarosserie 3 befestigt wird. Die Karosserie 3 ist beispielhaft mit wenigstens einer, vorzugsweise mit mehreren Aussparungen 23 versehen, in die das Spiegelgehäuse 2 mit Ansätzen 22 eingreift. Die Verbindung zwischen dem Spiegelgehäuse 2 und der Karosserie 3 kann in jeder geeigneten Art und Weise erfolgen.

Innerhalb des Spiegelgehäuses 2 ist im Aufnahmeraum 31 wenigstens eine Leuchteneinheit 25 untergebracht. Sie hat ein Leuchtengehäuse 26, in dem sich ein Reflektor 28 und wenigstens ein Leuchtmittel 29 befinden. Das vom Leuchtmittel 29 abgestrahlte Licht tritt durch einen transparenten Bereich 27 nach außen. Der transparente Bereich 27 kann beispielsweise einstückig mit der Rückwand 17 des Spiegelgehäuses ausgebildet sein. Es ist auch möglich, für den transparenten Bereich 27 eine separate Lichtscheibe zu verwenden, die in eine Öffnung in der Rückwand 17 des Spiegelgehäuses 2 eingesetzt wird. Wie bei der vorigen Ausführungsform kann die Leuchteneinheit 25 beispielsweise als Fahrtrichtungsanzeiger, Tagfahrlicht, Positionsleuchte, Umfeldbeleuchtung und dergleichen genutzt werden. Je nach Größe des Spiegelgehäuses 2 können mehrere Leuchteneinheiten 25 untergebracht werden, die in unterschiedlichen Leuchtenfunktionen miteinander kombiniert werden können.

Im Übrigen ist der Außenrückblickspiegel 1 gemäß Fig. 2 ähnlich ausgebildet wie die Ausführungsform nach Fig. 1. Er weist keinen geschlossenen Raum 18 auf. Er geht vielmehr in den Einbauraum 19 über. Der Raum 18 wird durch die Längswand 6' der Einformung 5' und durch eine parallel zur Fahrzeugkarosserie 3 liegende Wand 20 begrenzt. In der Wand 20 und in der Längswand 6' ist jeweils wenigstens eine Öffnung 13 vorgesehen, durch die Zuleitungen zur Leuchteneinheit 25 im Aufnahmeraum 31 geführt werden. Der Außenrückblickspiegel gemäß Fig. 1 kann ebenfalls als separate Einheit an der Karosserie 3 befestigt sein.

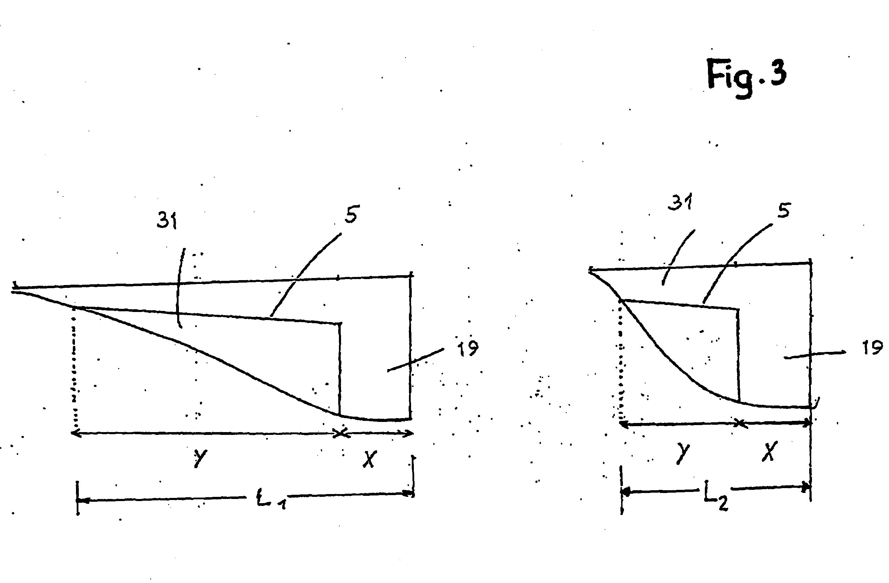

Fig. 3 zeigt schematische Beispiele bezüglich des Verhältnisses der Maße X, Y, L, die sich durch unterschiedliches Spiegeldesign ergeben. Behält man die Einbautiefe X für den Einbauraum 19 bei, d.h. X ist konstant, dann muss die maximale Länge Y der Einformung 5 bzw. des Aufnahmeraumes 31 variieren.

## Patentansprüche

1. Außenrückblickspiegel für Fahrzeuge, vorzugsweise für Kraftfahrzeuge, mit einem Spiegelgehäuse (2), das eine Rückwand (17) aufweist und in dem ein Halter (5, 5') für ein Spiegelglas (10) vorgesehen ist, das in einer Öffnung (16) des Spiegelgehäuses (2) liegt,
**dadurch gekennzeichnet, dass** der Halter (5, 5') Teil einer einen Aufnahmeraum (31) bildenden Einformung des einteilig ausgebildeten Spiegelgehäuses (2) ist, und dass der nach außen offene Aufnahmeraum (31) eine quer von der Rückwand (17) abstehende Querwand (7, 7') aufweist, an der das Spiegelglas (10) gehalten ist.

2. Außenrückblickspiegel nach Anspruch 1,
**dadurch gekennzeichnet, dass** der quer abstehende Abschnitt (7, 7') des Halters (5, 5') einen Abstand (X) von der Öffnung (16) des Spiegelgehäuses (2) hat.

3. Außenrückblickspiegel nach Anspruch 2,
**dadurch gekennzeichnet, dass** der Abstand (X) im Bereich zwischen etwa 30 mm und etwa 60 mm liegt.

4. Außenrückblickspiegel nach einem der Ansprüche 1 bis 3,
**dadurch gekennzeichnet, dass** der quer abstehende Abschnitt (7, 7') des Halters (5, 5') einen Einbauraum (19) für einen Spiegelantrieb (11) und das Spiegelglas (10) im Spiegelgehäuse (2) begrenzt.

5. Außenrückblickspiegel nach einem der Ansprüche 1 bis 4,
**dadurch gekennzeichnet, dass** an den quer abstehenden Abschnitt (7, 7') ein etwa in Längsrichtung (15) des Spiegelgehäuses (2) sich erstreckender Abschnitt (6, 6') anschließt, der eine Längserstreckung (Y) hat.

6. Außenrückblickspiegel nach einem der Ansprüche 1 bis 5,
**dadurch gekennzeichnet, dass** die Länge der Längserstreckung (Y) der Einformung der zur Verfügung stehenden Einbaulänge (L) im Spiegelgehäuse (2) abzüglich des Abstandes (X) des quer abstehenden Abschnittes (7, 7') des Halters (5, 5') von der Öffnung (16) des Spiegelgehäuses (2) entspricht.

7. Außenrückblickspiegel nach einem der Ansprüche 1 bis 6,
**dadurch gekennzeichnet, dass** der Längsabschnitt (6, 6') und der quer abstehende Abschnitt (7, 7') des Halters (5, 5') einen Einbauraum (31) für Einbauteile (25), insbesondere für wenigstens eine Leuchteneinheit, begrenzen.

8. Außenrückblickspiegel nach einem der Ansprüche 1 bis 7,
**dadurch gekennzeichnet, dass** die Einformung durch wenigstens eine Abdeckung (30) verschließbar ist.

9. Außenrückblickspiegel nach Anspruch 8,
**dadurch gekennzeichnet, dass** die Abdeckung (30) wenigstens teilweise lichtdurchlässig ist.

10. Außenrückblickspiegel nach einem der Ansprüche 1 bis 9,
**dadurch gekennzeichnet, dass** das Spiegelgehäuse (2) wenigstens eine Öffnung (13) zur Durchführung von Anschlüssen aufweist.

## Claims

1. An outside rearview mirror for vehicles, in particular, for motor vehicles, comprising a mirror housing (2), which comprises a rear wall (17) and in which a support (5, 5') for a mirror glass (10) is provided, which is disposed in an opening (16) of the mirror housing (2), wherein the support (5, 5') is part of a indentation of the integral mirror housing (2), wherein said indentation forms a receiver cavity (31), which is open to the outside and comprises a transversal wall (7, 7'), which transversally protrudes from the rear wall (17), wherein the mirror glass (10) is support at said transversal wall (7, 7').

2. An outside rearview mirror according to claim 1, wherein the transversally protruding section (7, 7') of the support (5, 5') comprises a distance (X) from the opening (16) of the mirror housing (2).

3. An outside rearview mirror according to claim 2, wherein the distance (X) is in a range of approximately 30 mm to 60 mm.

4. An outside rearview mirror according to one of the claims 1 through 3, wherein the transversally protruding section (7, 7') of the support (5, 5') defines an installation cavity (19) for a mirror drive (11) and for the mirror glass (10) in the mirror housing (2).

5. An outside rearview mirror according to one of the claims 1 through 4, wherein a section (6, 6') extending approximately in longitudinal direction (15) of the mirror housing (2) and comprising a longitudinal extension (Y) connects to the transversally protruding section (7, 7').

6. An outside rearview mirror according to one of the claims 1 through 5, wherein the length of the longitudinal extension (Y) of the indentation corresponds to the available installation length (L) in the mirror housing (2) minus the distance (X) of the transversally protruding section (7, 7') of the support (5, 5') from the opening (16) of the mirror housing (2).

7. An outside rearview mirror according to one of the claims 1 through 6, wherein the longitudinal section (6, 6') and the transversally protruding section (7, 7') of the support (5, 5') define an installation cavity (31) for installation components (25), in particular, for at least one illumination unit.

8. An outside rearview mirror according to one of the claims 1 through 7, wherein the indentation can be closed by at least one cover (30).

9. An outside rearview mirror according to claim 8, wherein the cover (30) is at least partially light permeable.

10. An outside rearview mirror according to one of the claims 1 through 9, wherein the mirror housing (2) comprises at least one opening (13) for passing connectors through.

## Revendications

1. Rétroviseur extérieur pour véhicules, de préférence pour véhicules automobiles, comprenant un boîtier de rétroviseur (2) muni d'une paroi arrière (17) dans laquelle est prévu un support (5, 5') pour un miroir (10) placé dans une ouverture (16) du boîtier de rétroviseur (2),
**caractérisé en ce que** le support (5, 5') est un élément de l'espace récepteur (31) formant un moulage du boîtier de rétroviseur (2) réalisé d'un seul tenant, et que l'espace récepteur (31) ouvert vers l'extérieur présente un paroi transversale (7, 7') faisant saillie transversalement de la paroi arrière (17) où le miroir (10) est maintenu.

2. Rétroviseur extérieur selon la revendication 1,
**caractérisé en ce que** la section (7, 7') faisant saillie transversalement du support (5, 5') est à une distance (X) de l'ouverture (16) du boîtier de rétroviseur (2).

3. Rétroviseur extérieur selon la revendication 2,
**caractérisé en ce que** la distance (X) est comprise entre approximativement 30 mm et 60 mm.

4. Rétroviseur extérieur selon l'une des revendications 1 à 3,
**caractérisé en ce que** la section (7, 7') faisant saillie transversalement du support (5, 5') délimite un logement (19) pour un système d'entraînement du miroir (11) et le miroir (10) dans le boîtier de rétroviseur (2).

5. Rétroviseur extérieur selon l'une des revendications 1 à 4,
**caractérisé en ce qu'**une section (6, 6') ayant une extension longitudinale (Y) et s'étendant approximativement dans la direction longitudinale (15) du boîtier de rétroviseur (2) se raccorde à la section (7, 7') faisant saillie transversalement du support (5, 5').

6. Rétroviseur extérieur selon l'une des revendications 1 à 5,
**caractérisé en ce que** la longueur de l'extension longitudinale (Y) du moulage en creux correspond à la longueur d'installation (L) dans le boîtier de rétroviseur (2) déduction faite de la distance (X) de la section (7, 7') faisant saillie transversalement du support (5, 5') de l'ouverture (16) du boîtier de rétroviseur (2).

7. Rétroviseur extérieur selon l'une des revendications 1 à 6,
**caractérisé en ce que** la section longitudinale (6, 6') et la section (7, 7') faisant saillie transversalement du support (5, 5') délimitent un espace récepteur (31) pour pièces de montage (25), notamment pour au moins un dispositif d'éclairage.

8. Rétroviseur extérieur selon l'une des revendications 1 à 7,
**caractérisé en ce que** le moulage en creux peut être fermé par au moins un cache (30).

9. Rétroviseur extérieur selon la revendication 8,
**caractérisé en ce que** le cache (30) est au moins en partie translucide.

10. Rétroviseur extérieur selon l'une des revendications 1 à 9,
**caractérisé en ce que** le boîtier de rétroviseur (2) présente au moins un orifice (13) permettant le passage de connexions.
